# EUROPEAN PATENT SPECIFICATION

(11) **EP 3 382 848 B1**
(45) Date of publication and mention of the grant of the patent: **06.01.2021**
(21) Application number: 18164880.9
(22) Date of filing: 29.03.2018
(51) Int. Cl.: H02J 7/00, H02J 7/08, H02J 7/10

(54) **METHOD AND DEVICE FOR BATTERY CHARGING AND MAINTENANCE**
VERFAHREN UND GERÄT ZUM LADEN UND WARTEN VON BATTERIEN
PROCÉDÉ ET DISPOSITIF DE CHARGE ET DE MAINTENANCE DE BATTERIE

(30) Priority: 30.03.2017 US 201715473789
(43) Date of publication of application: 03.10.2018
(73) Proprietor: Platonov, Gennady, 119180 Moscow (RU)
(72) Inventor: Platonov, Gennady, 119180 Moscow (RU)
(74) Representative: Zahn, Matthias

(56) References cited:
- EP-A1- 0 623 252
- GB-A- 1 160 803
- US-A- 4 253 054
- US-A- 4 523 268
- US-A- 5 115 387
- US-A- 5 998 968
- US-A1- 2009 029 192
- US-B1- 9 461 492

## Description

### Technical Field

This invention relates to electro-technological methods and devices for the maintenance of batteries, allowing to carry out the state control, regenerative charging, and cyclical recovery state of the battery.

### Background

United States Patent Publication No. US 2004/0032247, by Dykeman, discloses a battery charging system that provides cyclic charging pulses to a battery, wherein the charging pulse has a current component and a voltage component that varies between a quiescent voltage and a maximum voltage. The system further comprises a battery monitoring circuit adapted to monitor one or more of the battery's parameters that respond to the charging pulses, and a control module that adjusts the configuration of the current component of the charging pulses to maintain the voltage component in a range between the quiescent voltage and the maximum voltage in response to the monitored battery parameter. Charging and discharging pulses are alternated during the charging cycle. The published patent application further discloses a temperature sensing charger in which the charge-discharge cycle is further regulated based upon the detected temperature of the battery. The main disadvantage of this system is that it does not have a high recovery efficiency for different battery states restored in the battery during an initial period of operation.

United States Patent Ser. No. US 7,557,541, to Marinka-Tóth et al., discloses a charging method by which the molecular movements in the cells of the rechargeable battery can be accelerated. Through this process, the time necessary for the chemical transformations and the time necessary for the full charge itself can be reduced. In that patent, there are different charging intervals inserted into the charging current, namely interval "a," which is a pulsed charging interval, followed by an interval "e," which is a charging interval with a continuous charging current. That patent discloses using a short discharge interval prior to charging to increase a battery's charge take-up capacity. That patent also monitors the internal resonance of the battery.

United States Patent Ser. No. US 6,856,118, to Lindqvist et al., discloses a battery charging system using hardware, software, and microcomputers to control the charging of the battery. Per that disclosure, temperature and conductivity measurements are additionally taken to control the battery charging. That patent regards a regeneration process for a battery, first to regenerate the chemical storage capacity, then to discharge the battery, and finally to recharge the battery. That patent also discloses a network and data storage system for the batteries to track their maintenance over time.

United States Patent Ser. No. US 6,504,344, to Adams et al., discloses a system for determining the health of a battery with multiple modules by measuring the health of each module, performing a discharge of each module, and then recharging each module, progressing from one module to the next. That disclosure takes into account the temperature of the battery or battery modules when performing the health measurement, as well as the charge and discharge cycles. That disclosure may offer the possibility of individual equalization of the individual cells in the battery, but that possibility requires a connection to the current lead battery as an additional charge source. Modern batteries do not always have access to current lead so the use of the method as disclosed by Adams et al. is limited to specific battery types.

United States Patent US 4,253,054 to Steigerwald describes a battery charger circuit. The battery has an increased charge acceptance because the circuit applies a period discharge to the battery.

United States Patent US 5,998,968 to Pittman et al. describes a battery charger as well. The circuit applies periodic charge and discharge pulses that are separated by pauses.

United States Patent US 9,461,492 B1 to Berkowitz et al. describes a battery charger with charge and discharge pulses. Parameters for the pulses are selected in dependency of battery parameters, such as the amount of usage time of the battery and the state of charge of the battery.

In general, thyristors are unidirectional half-controlled electric wrenches. Thyristors can be forced open, and they close automatically if the current in its power circuit becomes less than the retention current. The main advantage of thyristors is their high overload capacity: 10 fold to 30 fold excess of the limit (shock; surge current) on current workers (i.e. normal operating current). The consequence of this is the high reliability of the devices formed on thyristors. The main drawback of a thyristor, however, is the complexity of the forced locking.

To improve the reliability of the operation of thyristor devices, developers prefer to provide the thyristor with intrinsic blocking (transitions through zero voltage in the power supply). Switching thyristor systems that control torques provide pulse-phase control, which controls a delay of the switching pulse with respect to the thyristor at a zero crossing in the mainstream voltage. This control principle is widely used in thyristor-controlled rectifiers and inverters, i.e., in a subordinated network. The latter term implies that the inverter thyristors provide natural commutation, i.e., they are blocking under the influence of the mainstream voltage.

However, even when a battery charge is necessary to form a reverse current (the accumulator must be charged), i.e., to provide a consistently performing thyristor rectifier and inverter driven network, the design still cannot allow the simultaneous operation of a thyristor rectifier and of an inverter, as this will lead to a short circuit in the network via the thyristors. Thus, such operation (i.e., providing a reverse current) is possible only after the closing of one or the other thyristor. The minimum pulse repetition period of the reverse current is 70-80 ms ("milli seconds"), depending on the frequency of the current in the network), which is higher (i.e. longer) than the desired value in methods for battery charging and maintenance.

### Summary

The present invention addresses this problem of the minimum pulse repetition period. The claimed invention provides a battery in the process to introduce an additional stage of alignment for batteries. In that alignment (or "equalization") stage, the average value of the reverse current (i.e. discharge current) can substantially equal the average value of the forward current (i.e. charge current). The term "stage" stands for an activity, process step, or method step. In this case, the conditions are created for the opening of pores in the salt deposits on the electrodes of the battery. In cases that the battery is not charged, the alignment is performed between the individual characteristics of the cells in the battery. The alignment process will be accompanied by a decrease in the internal resistance of the battery (that is desired), and the completion of the alignment process can be seen in the stabilization of this resistance. The alignment process has a duration from 0.5 hour to 1.0 hour.

The invention is set out in the appended claims. In some aspects, the present invention comprises a device for battery charging and maintenance (or "servicing"), comprising a terminal for an accumulator battery; the terminal having a positive side connected to a current sensor; the terminal having a negative side connected to ground; the current sensor being electronically connected to a rectifier, said rectifier comprising at least three rectifier thyristors, and an inverter, said inverter comprising at least three inverter thyristors; the rectifier and the inverter being connected to a transformer; the transformer being connected to a power supply; and the terminal, the accumulator battery, the inverter, the rectifier, and the current sensor being together electronically connected to a phase-pulse control system, thus forming a power supply network, said phase-pulse control system being configured to cause the power supply

network to perform at least one stage, said stage comprising:
(1) forming a first pulse, said first pulse being formed by the rectifier, said first pulse being synchronized via a front transition of a sinusoidal inter-phase voltage signal,
   - wherein a first timer-counter controlling a first set of rectifier thyristors is synchronized by a first inter-phase voltage,
   - wherein a second timer-counter controlling a second set of rectifier thyristors is synchronized by a second inter-phase voltage,
   - wherein a third timer-counter controlling a third set of rectifier thyristors is synchronized by a third inter-phase voltage,
(2) measuring a total period (T) in the power supply network, said measuring being performed by one of said timer-counters,
(3) causing a pause (i.e. no current), said pause being caused by an end of an interval prior to a consecutive front transition, said pause further causing a closure of all rectifier thyristors ("closure" in the meaning that the thyristor becoming non-conductive),
(4) forming a second pulse, said second pulse being formed by the inverter, said second pulse being synchronized at moments of inter-phase voltage peaks in the power supply network, said inter-phase voltage peaks being determined by adding an interval of T/4 to a given moment of a front transition of an inter-phase voltage,
   - wherein a fourth timer-counter controlling a first set of inverter thyristors is synchronized by the first inter-phase voltage,
   - wherein a fifth timer-counter controlling a second set of inverter thyristors is synchronized by the second inter-phase voltage,
   - wherein a sixth timer-counter controlling a third set of inverter thyristors is synchronized by the third inter-phase voltage; and
(5) repeating said first pulse, said pause, and said second pulse.

In some aspects, the pause is 25-30 ms of duration. In some aspects, the pause is 30-70 ms. In some aspects, T is measured at least twice by said timer-counter and an average value of T is determined via a processor coupled to said timer-counter. It is noted that for European power networks that operate at 50 Hertz power line frequency, T is 20 ms, and that measuring accommodates minor fluctuations of the frequency. Measuring T is performed by taking samples from time to time.

In some aspects, the phase-pulse control system is in further electronic communication with a programmable logic controller. In some aspects, the programmable logic controller is further electronically connected to a human machine interface (HMI) and to a thermal monitor. In some aspects, the thermal monitor is further connected to a thermal sensor (i.e., temperature sensor), said thermal sensor being in contact with the accumulator battery.

Also disclosed is a method for battery maintenance, comprising connecting a battery to a power supply network, performing at least one stage of charging, said at least one stage of charging comprising:
(1) forming a first pulse, said first pulse being formed by a rectifier, said rectifier comprising at least three rectifier thyristors, said first pulse being synchronized via a front transition of a sinusoidal inter-phase voltage signal, wherein a first timer-counter controlling a first set of rectifier thyristors is synchronized by a first inter-phase voltage, wherein a second timer-counter controlling a second set of rectifier thyristors is synchronized by a second inter-phase voltage, wherein a third timer-counter controlling a third set of rectifier thyristors is synchronized by a third inter-phase voltage,
(2) measuring a total period (T) in the power supply network, said measuring being performed by one of said timer-counters,
(3) forming a second pulse, said second pulse being formed by an inverter, said inverter comprising at least three inverter thyristors, said second pulse being synchronized at moments of inter-phase voltage peaks in the power supply network, said inter-phase voltage peaks being determined by adding an interval of T/4 to a given moment of a front transition of an inter-phase voltage, wherein a fourth timer-counter controlling a first set of inverter thyristors is synchronized by the first inter-phase voltage, wherein a fifth timer-counter controlling a second set of inverter thyristors is synchronized by the second interphase voltage, wherein a sixth timer-counter controlling a third set of inverter thyristors is synchronized by the third inter-phase voltage;
(4) wherein a pause occurs between said first pulse and said second pulse, said pause being caused by an end of an interval prior to a consecutive front transition, said pause further causing a closure of all rectifier thyristors,
(5) thus forming a first pulse-pause-second pulse signal for one or more stages of battery maintenance, and
(6) repeating said first pulse, said pause, and said second pulse.

It is noted that while the rectifier and the inverter comprise at least three thyristors each, implementing both the rectifier and the inverter with six thyristors each can be advantageous, because all halve-waves of the power network are considered.

In some aspects, the maintenance method comprises using only a pre-charge forward current in a first stage (i.e., pre-charging). In some aspects, the method further comprises a second stage of maintenance (i.e. to maintain the battery), said second stage employing a current pattern that is provided for stabilizing the internal resistance of the battery. In some aspects, the method further comprises a third stage of maintenance, said third stage employing pulses of reverse current and following said pulses of reverse current with a dead time (i.e. a pause). In some aspects, the method further comprises a fourth stage of maintenance, said fourth stage charging the battery using a reverse current. In some aspects, the third stage and the fourth stage are repeated at least once. In some aspects, the second stage (as mentioned, to stabilize the internal resistance of the battery) is performed with a duration in the magnitude between 0.5 to 1 hours.

In some aspects, the current pattern period is between 30 ms and 1000 ms in duration. In some aspects, during stage 2, the average values of reverse current and of the forward current are equal. In some aspects, a reverse current period is between 30 ms and 1000 ms in duration. In some aspects, during stage 3 a duration of current pulses is between 180 ms and 1000 ms and a duration of the dead time (i.e. pause) is between 1000 ms and 5000 ms. In some aspects, during stage 3 a ratio (i.e. coefficient) between forward current and reverse current is between 10:1 and 20:1. Such a coefficient is also applicable for the ratio of the duration of forward current and the duration of the pause. In some aspects, the method further comprises implementing a temperature control of an electrolyte in the battery, comprising: monitoring the battery and determining if a battery temperature exceeds values of a first temperature threshold (the threshold being within the range between 35°C and 50 °C) during maintenance then reducing the charge current by 30 - 50 % and extending a charging stage for the battery accordingly; and monitoring the battery and determining if a battery temperature exceeds values of a second temperature threshold (being within 45°C and 59 °C) during maintenance then interrupting maintenance until the battery has cooled to a predefined temperature (that is predefined within the range between 25 and 35 °C).

There is an advantage that electrical energy from the accumulator battery can be returned (via power transformers) to the power net. In other words, energy recovery is possible from the battery via the inverter to the power network.

### Brief Description of the Drawings

The present invention will now be discussed in further detail below with reference to the accompanying figures, in which:
Fig. 1 shows a functional diagram of the device for accumulator and/or battery maintenance as described herein.
Fig. 2 shows the steps of the method for battery maintenance as described herein.
Fig. 3 shows a more detailed version of the functional diagram shown in Fig. 1.
Fig. 4 shows an example of a formation of the output voltage pulses by the thyristors of the rectifier according to one embodiment of the present invention.
Fig. 5 shows an example of a formation of the output voltage pulses by the thyristors of the inverter according to one embodiment of the present invention.
Fig. 6 shows an example of a formation of the combined output voltage pulses of the forward-reverse current according to one embodiment of the present invention.
Fig. 7 shows a time diagram of a current pattern with forward and reverse current.

### Detailed Description

In general, and based on the state of the art, the leading cause of deterioration of lead-acid battery parameters is the partial irreversible negative electrode sulfation. The leading cause of deterioration of alkaline battery parameters is the partial irreversible hydration of the alkali. These processes are related to the overgrowth of salt deposits formed on the electrodes when the battery discharges. If for charging the battery, the current follows a direction-alternating pattern, then the recovery process in the salt precipitate is intensified and there is a more complete electro-dissolution salt sediment and an increase of the recovered area in the electrodes of the battery. At the same time with the opening of pores in the battery with a partial capacity for work will be charged and fully functioning batteries that will not lead to the equalization of the characteristics between the individual batteries.

The present invention describes a charge-discharge means used for maintenance of lead-acid and alkaline accumulator batteries. One of the novelties of the invention is the charge-discharge means used for maintenance of lead-acid and alkaline batteries and rechargeable batteries. The term "charge-discharge means," as used herein, is defined as including but not limited to the creation of forward currents and reverse currents in a circuit, via the closing and opening of thyristors according to a periodic signal, which in turn causes a flow of either a positive current (forward current) or a negative current (reverse current), the thyristor(s) being connected in the circuit with a battery to be charged and/or to be maintained.

As used herein, the description describes the application of current to the battery in 3 granularities, with current pulses (current in pre-defined direction, with predefined magnitude and re-defined duration), current pattern (a sequence of current pulses, usually of two different pulses, optionally with pauses, or "dead times"), pattern application stages, or simply "stages".

Occasionally, the description refers to thresholds (of voltages, current, temperature etc.). Person of skill in the art can define the thresholds within ranges. As a convention, both the phrase "within a range from A to B" (or similar phrases), and the notation "(A-B)" indicate that the range starts at A (including) and ends at B (including). Such a convention is also applicable to percentages as well. Depending on implementations, the person of skill in the art can select A, select B or select a value between A and B to be the threshold.

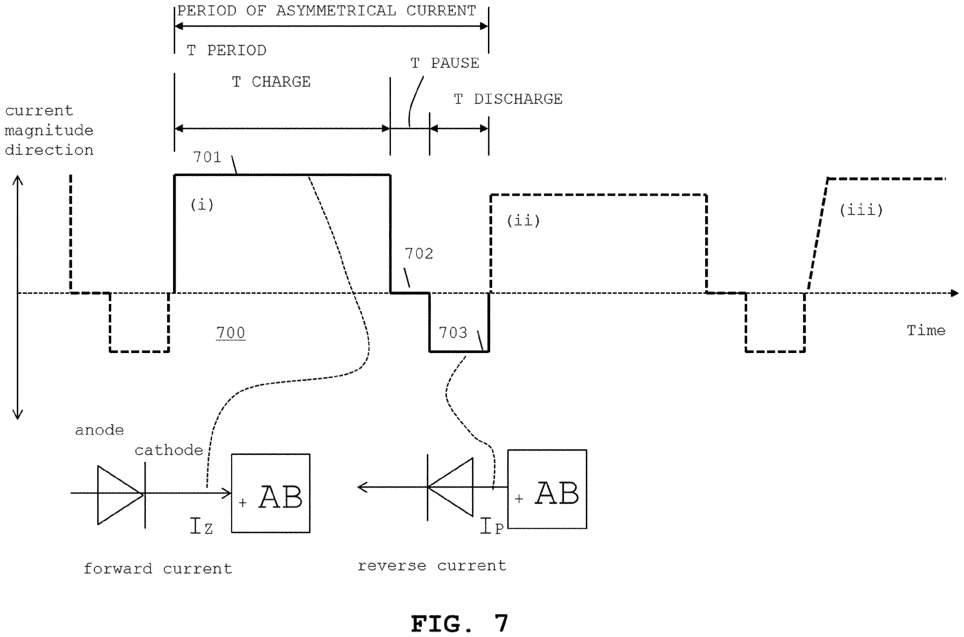

Fig. 7 shows a time diagram of current pattern 700 with forward current 701 (pulse) and with reverse current 703 (pulse). FIG. 7 is presented to introduce writing conventions that are used herein. The term "current pattern" describes the application of current pulses to the battery in schemes that are pre-defined with different current directions (i.e. signs, here indicated by indices "Z" and "P"), with different duration of current flow (T CHARGE, T DISCHARGE, T PAUSE, T PERIOD etc.) and with different magnitudes of the current (i.e., absolute values | |). A single current pattern has a duration T PERIOD in the order of 10 ms to 1000 ms (milliseconds).

So-called "stages" are repetitions of similar current patterns 700. Stages are measured in the order of magnitude of minutes or hours.

To distinguish directions of current flow, the description uses the terms "forward current" and "reverse current". Forward current adds charge to the battery (i.e. charges the battery) and reverse current removes charge from the battery (i.e., discharges the battery). For example, a current flowing from the anode (of a thyristor) to the cathode (of the thyristor) and then flowing to the plus terminal of the battery is forward current (I_{Z}). A current flowing from the plus terminal (of the battery) from the anode to the cathode is reverse current (I_{P}). (In the figure, the gate of the thyristors is not illustrated). Such a convention assumes that the minus terminal of the battery is connected to ground. The person of skill in the art can also modify the convention and connect the thyristors to the minus terminal of the battery.

It is noted that - at any point in time - a current is either forward current or reverse current (but there is no forward and reverse current applied at the same time.). The forward current can also be regarded as a positive current (I₊), and the reverse current can also be regarded as negative current (I₋).

There are two thyristor arrangements coupled between the transformer and the battery. One arrangement - labelled "rectifier R" - converts alternating current (AC) from the transformer to direct current (DC) at the battery. The other arrangement - labelled "inverter I" - converts DC from the battery to AC at the transformer.

As the term suggests, the two thyristor arrangements comprise thyristors. In implementations, the thyristors in both arrangements are of the same type. As used herein, the term "rectifier thyristor" stands for a thyristor that belongs to the rectifier; and the term "inverter thyristor" stands for a thyristor that belongs to the inverter. In other words, technically there is not difference between a "rectifier thyristor" and an "inverter thyristor".

A current sensor (or "current meter") that measures the magnitude of the current (e.g., in amperes) can be switched in series connection between the battery and the I and R arrangements. It does not matter if the current sensor is coupled to the plus terminal or to the minus terminal.

The battery has a terminal with a positive side (plus terminal, in the drawings with the + sign) and a negative side (minus terminal). In the example, the minus terminal is connected to ground. It is noted that implementations without ground are also possible.

Electrical currents, voltages and capacities are referred to by usual acronyms (I, U, and C, respectively) in combination with sub-titled indices, such as Z (indicating charge), P (indicating discharge), N (indicating a rated value, or - synonym - "nominal value"), C (indicating control, and/or indicating correction), K (indicating compensation). The acronym "Co" stands for "coefficient".

Implementations are illustrated with six thyristors each in the rectifier R and in the inverter I. Persons of skill in the art understand that the minimal number of thyristors each is three. Arrangements of six thyristors use AC more efficiently, with the positive half-wave and the negative half-wave. In the implementations with six thyristors, both the rectifier R and the inverter I have 3 thyristor pairs (thyristors conduct current depending on the AC half-waves).

Returning to FIG. 7, for convenience of explanation the description occasionally uses the term "asymmetrical current" or "asymmetrical pattern". The term "asymmetrical" is used in the sense that the currents have different direction (i.e. "forward" and "reverse"), different magnitudes (i.e. | |) or different durations (i.e. T CHARGE, T DISCHARGE).

(This is different from the symmetrical pattern of an alternating current, well known as a sinus wave: with positive and negative half wave of equal duration, equal magnitudes and equal durations.)

Current pattern 700 can comprise the following portions: a forward current 701, a pause (i.e. no current) 702, and a reverse current 703.

In modal term "can" indicates that not all portions are required. Rectifier R and inverter I are able to provide such pattern 700, but it is no required that pattern 700 is the same for all stages.

In the current pattern that is illustrated in the figure, there is forward current I_{Z} during T CHARGE, there is a short pause T PAUSE (substantially no current flow), and there is reverse current I_{P} during T DISCHARGE. T CHARGE, T PAUSE and T DISCHARGE are measured in the order of milliseconds (ms). It is noted that the magnitude of the forward current (|I_{Z}|) does not have to be equal to the magnitude of the reverse current (|I_{P}|). T CHARGE does not have to be equal to T DISCHARGE. In that sense, there is asymmetry in terms of current magnitude, durations, and current direction. (It is noted that current pattern 700 does not correspond to sinus-shaped AC that is symmetric in terms of magnitudes, durations and direction). T PAUSE is unavoidable and depends on the switching properties of the thyristors.

A cycle of T CHARGE, T PAUSE, and T DISCHARGE is called "period of asymmetrical current". It is also asymmetrical, if one portion is absent (e.g., reverse current in portion 703). As indicated by dashed lines, the cycle is being repeated, here illustrated for cycles (i), (ii) and (iii). As the magnitudes of the currents can vary (e.g., from (i) to (ii) or within a cycle as in (iii)), the current magnitudes are calculated as average values.

The present invention also describes a technological method for battery maintenance that allows for the monitoring of battery condition, alignment characteristics of the cells in the battery, charge or recovery of the battery, and a device for implementing the method.

Rechargeable battery maintenance is accomplished by alternating modes of full discharge control regimes and subsequent full charge. To equalize the electrolyte concentration gradient in the cells of the battery undergoing maintenance between the previous charge cycle and the next discharge cycle, there is generally an interruption applied (or pause, with durations between 10 minutes and 180 minutes).

Control discharge of the battery is performed using a stable and constant-direction current, I_{P} (see Table 2), to its full discharge voltage, U_{P} (see Table 2). During the discharge process, the output capacity of the battery is measured so that monitoring is possible.

The method of charging the battery generally consists of 4 stages (i.e., activity phases):
- preliminary charging (1st stage), with a current (see Tables 1, 2, sign changing currents),
- levelling (2nd stage, also with sign changing current),
- charging using pulses of current followed by dead times (or pauses) (3rd stage, currents changing sign as well), and
- charging using current (4th stage), I_{Z4} (see Table 2, currents changing sign as well).

In other words, depending on the stage, the current pattern 700 with its components 701-703 is provided as follows (TABLE 1):

| | | | |
|---|---|---|---|
| stage (purpose) | 701 I_{Z} | 702 Pause | 703 I_{P} |
| stage 1 (preliminary charging) | I_{Z1} T CHARGE = 20 ... 945 ms | T_{PAUSE} = 3 ... 5 ms | I_{Z1}/20 ... I_{Z1}/5 T DISCHARGE = 5 ... 170 ms |
| stage 2 (stabilize parameters of the accumulators in the battery) | I_{Z1}/2 T CHARGE = 20 ... 500 ms | T PAUSE = 3 ... 5 ms | I_{Z1}/2 T DISCHARGE = 3 ... 455 ms |
| stage 3 (pulse charge) | I_{M} T CHARGE = 165 ... 950 ms | T PAUSE = 3 ... 5 ms | I_{M}/20 ... I_{M}/10 |
| stage 4 (charge) | I_{Z4} T CHARGE = 20 ... 945 ms | T PAUSE = 3 ... 5 ms | I_{Z4}/20 ... I_{Z4}/5 |

For simplicity, the currents are given as magnitudes, without a plus/minus, but the different signs (I_{Z} in 701 and I_{P} in 703) are noted.

If necessary, stages 3 and 4 are repeated several times. The completion of stage 1, stage 3, and stage 4 is carried out based on the charge time.

Completion of stage 2 is carried out to stabilize the internal resistance of the battery, taking approximately 0.5 to 1 hours. At stages 1 and 4, the period T PERIOD of asymmetrical current pattern (cf. FIG. 7, T CHARGE + T PAUSE + T DISCHARGE) is about 30 ms to 1000 ms of duration, and the ratio (i.e. a coefficient) of the current's average values (forward current to reverse current, taking the amounts of the current Co = |I_{Z}|/|I_{P}|) is between 5:1 and 20:1 (i.e. Co = 5 ... 20). In other words, in such a current pattern, the forward current has a magnitude that is 5 to 20 times larger than the magnitude of the reverse current.

During stage 2, the average values of the forward and of the reverse current (of the pattern) are equal. Each of which is calculated as the value, I_{Z1}/2, cf. Table 2. The reverse current period is the same as in stage 1.

In stage 3, the charge duration of the current pulse (with changing sign) is about 180 ms to 1000 ms, followed by a dead time of 1000 ms to 5000 ms. The amplitudes of forward and reverse components are equal to I_{M} (see Table 2), and the ratio of their mean values is between 10:1 and 20:1.

The battery maintenance process is completed if any of following completion conditions (i), (ii) is complied with:
(i) there is no increase compared to the previous cycle in a control discharge capacity of the battery, or
(ii) if the last control discharge output was between 95% and 100% of a nominal capacity (i.e. rated capacity) of the battery being serviced.

During the process of battery maintenance, a temperature control of the electrolyte in the battery is implemented. If the battery temperature exceeds values of 35°C-40°C while being charged, a single reduction in charging current of 30%-50% is implemented and the charging stage is extended accordingly and proportionately. If the temperature range of the battery exceeds 45°C-50°C, then the process is interrupted until the battery has cooled to a temperature of 25°C-35°C.

As used herein and explained above, the indication of threshold values as ranges (such as A°C - B°C, or A% - B%) is a convenient abbreviation for an implementation option by that the person of skill in the art can apply suitable temperature values as maximum values, wherein that maximum values are within the given ranges (e.g., "A°C - B°C"). For example, the temperature that triggers the interruption is set to 45°C, but implementations at the higher end of 50°C are also possible.

In the charge and discharge processes, the voltage across the battery and the control group of battery cells are being controlled. If their maximum permitted voltage values, U_{M}, are exceeded (see Table 2), battery charging is terminated. If, during the charge stage, the set voltage value, Uₖ (see Table 2), is exceeded, then the charge current is decreased by 20% - 50% and the stage phase duration is lengthened accordingly and proportionately.

**TABLE 2. The values of technological parameters for serviceable types of accumulator batteries (where C_{N} being the nominal capacity of the battery, in Ampere-hours Ah; and n being the number of accumulators in the battery):**

| No P/P | Parameter | Unit | Value | |
|---|---|---|---|---|
| | | | Lead Acid Type | Alkaline Type |
| 1 | Discharge current, I_{P} | Ampere | (0.025 - 0.2)·C_{N} | (0.1 - 0.2)·C_{N} |
| 2 | The voltage of full charge, U_{P} | Volt | (1.75 - 1.8)·n | (1 - 1.1)·n |
| 3 | The current I_{Z1} of the first phase, charging | Ampere | (0.025 - 0.1)·C_{N} | (0.05 - 0.25)·C_{N} |
| 4 | The amplitude (I_{M}) of the current pulses of the third stage charging | Ampere | (0.2 - 2)·C_{N} | (0.25 - 4)·C_{N} |
| 5 | Fourth stage charge current, I_{Z3} | Ampere | (0.05 - 0.2)·C_{N} | (0.1 - 0.25)·C_{N} |
| 6 | Charge current compensation voltage, U_{K} | Volt | (2.4 - 2.65)·n | (1.75 - 1.85)·n |
| 7 | Termination voltage U_{M} of the charge process | Volt | (2.65 - 2.8)·n | (1.85 - 1.9)·n |

Line 7 of the table indicates a threshold that is applied to determine the point when charging the battery is completed. The threshold is not given as a single value, but as range. For example, in implementations for lead acid batteries U_{M} is calculated as 2.65 Volt multiplied with the number of cells. In other implementations, U_{M} is calculated with the 2.8 multiplier. In it noted that deviations to the U_{M} ranges are acceptable with a tolerance of plus/minus 2.5 %.

The device, implemented according to the claimed method of battery maintenance, and performing the same steps as the claimed method of battery maintenance, comprises a power transformer (Tr) of the thyristor rectifier (R), the (slave network) thyristor inverter (I) (the inverter considered to be part of a network that is sub-ordinated to the power network), an output current sensor (CS), a temperature sensor (TS), a system of phase-pulse thyristor control (PPCS), a programmable logic controller (PLC), an operator human machine interface (HMI) panel, and - optionally - a battery temperature monitor (TM).

The output current sensor is connected to the battery being serviced (AB), in which the individual control is performed by temperature sensors (TS) that are placed on the batteries. Power is provided to the device from the main AC power.

Formation of the battery discharge current is carried out in the thyristor inverter and the reverse current - due to alternate work thyristor rectifier and inverter driven network. These thyristors are controlled using the PPCS. The PPCS also provides digitization of signals (i.e. by analog-to-digital converters) from the output current sensor (CS) and the voltage across the battery, and the PPCS controls the battery. The digitized data is transmitted to the PLC. The PPCS performs the function of stabilizing the device's output current.

The algorithm of the proposed method of battery maintenance for batteries in storage is implemented by the PLC. The PLC controls the thyristor phase-pulse control system. The TM collects data from thermal sensors in the accumulators (i.e. cells) of the battery (that is undergoing maintenance) and sends that data to the PLC.

The battery maintenance process operator controls the device using the HMI and is connected to the PLC.

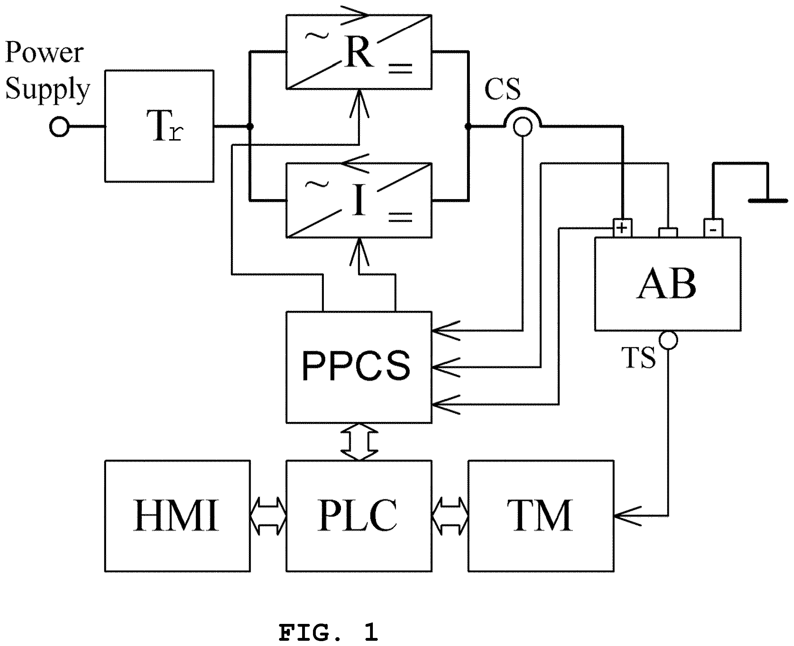

Figure 1 shows a functional diagram of the device according to the present invention. The core components and device blocks are labelled on the diagram as follows: Tr - Transformer; R - Rectifier; I - Inverter; CS - Current Sensor; AB - Accumulator Battery; PPCS - Phase-Pulse Control System; HMI - Human Machine Interface; PLC - Programmable Logic Controller; TM - Thermal Monitor; and TS - Temperature Sensor.

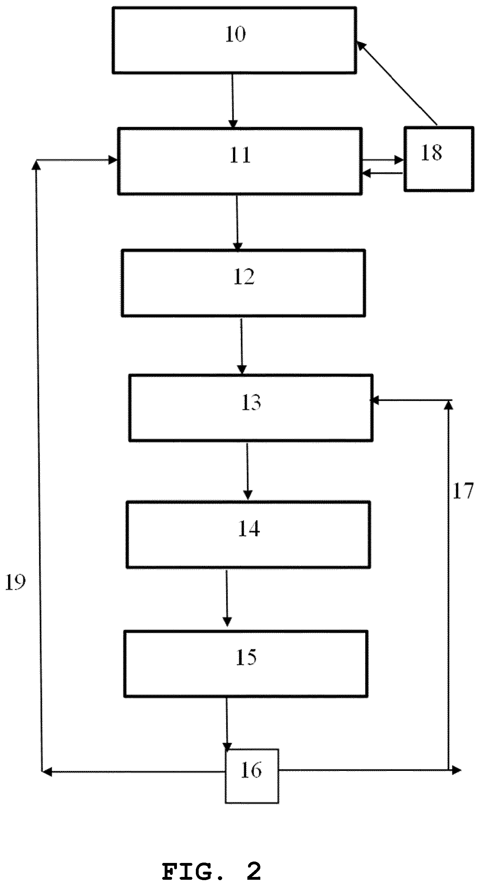

Fig. 2 shows the steps of the method for battery maintenance according to the present invention:
- 10 - connecting a battery to be maintained to the battery maintenance device;
- 11- stage 1 using a pre-charge forward current ("pre-charge" being the label for this stage, to open the majority of the pores in the salt deposits at the surface of the electrodes of the battery cells, to be as efficient as possible, by using current that changes its sign, cf. 701/703);
- 12 - stage 2 equalizing parameters of the battery cells, by using current that changes its sign (This stage can also be considered as averaging. This is the reduction of the difference between the individual cells of the battery, achieved by applying the current that changes its sign);
- 13 - stage 3 using pulse(s) of current with changing sign, and with no-current-periods (or pauses);
- 14 - stage 4 charging the battery using current (with changing sign);
- wherein each stage (1-4) involves either forward current or dead time (pauses) alternating with reverse current;
- 15 - determining a battery charge amount via a battery charge control unit coupled to the battery.

If the battery charge control unit 15 indicates full charge, the process is determined as completed 16. Alternatively, 17, stages 3 and 4 may be repeated several times until the battery charge control unit 15 indicates that the battery is fully recharged.

Stage 2 is ongoing during 0.5 hours to 1 hour, until the internal resistance of the battery is stabilized, wherein the resistance is being measured according to the values of voltage and current, measured by the PPCS.

During stages 1 and 4, a reverse current period is between 30 ms and 1000 ms. During stage 1 and stage 4, there is a ratio (or coefficient) applicable to the asymmetrical current pattern: In a first alternative (1), the coefficient corresponds to the relation of the average values of the direct current to the reverse current (sign being disregarded |IZ|/|IP|). In a second alternative (2), the coefficient corresponds to the duration of the direct current and the pause (i.e. T CHARGE/ T PAUSE). In both alternatives, the coefficient has a magnitude between 5 to 1 and 20 to 1 (i.e. Co = 5 ... 20).

During stage 2, the average values of reverse current and forward current (of the current pattern) are preferably equal. During stage 2, a period has a duration T PERIOD of preferably between 30 ms and 1000 ms.

During stage 3, a duration of the pulses of reverse current is preferably between 180 ms and 1000 ms, and a duration of the dead time (T PAUSE) is preferably between 1000 ms and 5000 ms. During stage 3, the ratio (or coeffient Co) between (1) the reverse current and the forward current is preferably within the range between 10:1 and 20:1 (i.e., Co from 10 to 20).

The completion of battery maintenance 16 occurs if any of the above-explained completion conditions (i), (ii) is complied with.

Optionally, the method for battery maintenance preferably includes the step 18 of implementing temperature control of an electrolyte in the battery. This step 18 includes monitoring the battery and determining if a battery temperature exceeds predefined values (within the range from 35°C to 50 °C) during maintenance, then reducing the charge current by 30-50% and extending a charging stage for the battery accordingly and proportionately. The step 18 also may include monitoring the battery and determining if a battery temperature exceeds values a further predefined value (within the range from 45 °C to 50 °C) during maintenance, and then interrupting maintenance until the battery has cooled to a temperature of 25°C to 35 °C.

The voltage that is controlled at the battery by way of checking the voltages at the battery and at a control group of battery cells. If it is determined that these voltages (at the battery) exceed a threshold, the servicing of the battery is stopped as a consequence. The person of skill in the art can define the threshold with tolerances (in terms of voltage and of time).

In one embodiment, the method comprises controlling the voltage of the battery by checking the voltage of battery and the voltage of a control group of battery cells. If it is determined that a threshold value is being exceeded, the charge current 19 is reduced by 20% to 50% and the stage phase duration is prolonged accordingly and proportionately.

The primary PPCS is a programmable high-speed system on a chip (SoC; 1). The PPCS system comprises: six timer-counters, a vector interrupt controller that supports at least three external interrupt inputs (Interrupt Input); an IO controller having at least twelve digital outputs (Digital Output); a 12-bit high-speed analog-digital converter (ADC) serving at least three analog inputs (ADC Input), and an asynchronous input-output serial port controller. In some embodiments, this controller comprises a Universal Synchronous/Asynchronous Receiver/Transmitter (USART).

The controller algorithm, implemented in SoC, enables formation of the alternating forward and reverse charge current pulses and formation of discharge current pulses. Furthermore, the algorithm provides independent regulation of the average values of these currents and high-speed protection of the thyristors of the rectifier and inverter from overcurrent. This algorithm, it's effects, and its benefits, are described in detail hereinbelow.

Synchronizing pulse generators 2 enable, in the PPCS, synchronization of the control signals by the thyristors of the rectifier (R) and inverter (I) via voltage in the power supply. Synchronization signals pass from the outputs of the synchronizing pulse generators 2 to the external interrupt inputs of the SoC 1, where during subroutine processing of these interrupts, the discharge synchronization of six timer-counters occurs, providing control of the phase-shifts of control pulses of the rectifier and inverter thyristors.

The thyristor control pulses of the rectifier from the SoC output pass to the thyristor pulse generators 4, which generate pulses with parameters sufficient for opening thyristors; in addition, the thyristor pulse generators 4 provide a galvanic isolation between input and output circuits. Similar inverter thyristor pulse generators 5 are installed in the control circuits of the inverter's thyristors.

The task of controlling the phase shift of control signals using thyristors is calculated using inputted and actual current values through the battery (AB). Inputted values of output current and other parameters for the required rectifier and inverter thyristor control mode pass to the PPCS from the PLC via serial communication, which is ensured by providing the SoC with USART, which has a network driver 3 (e.g., RS-485) installed on its outputs.

Signals from the current sensor (CS) and voltage sensors on the accumulator battery and accumulator control group pass to the PPCS inputs. In the PPCS, the signal from the current sensor is processed in the input amplifier 6, and voltage signals are processed in the differential amplifiers 7. Similar signals pass from the output of these amplifiers to the ADC SoC inputs, where the signals are digitized and averaged. The values obtained from this processing step are transmitted to the PLC, and an actual current value is used in the PPCS for controlling current through the battery (AB).

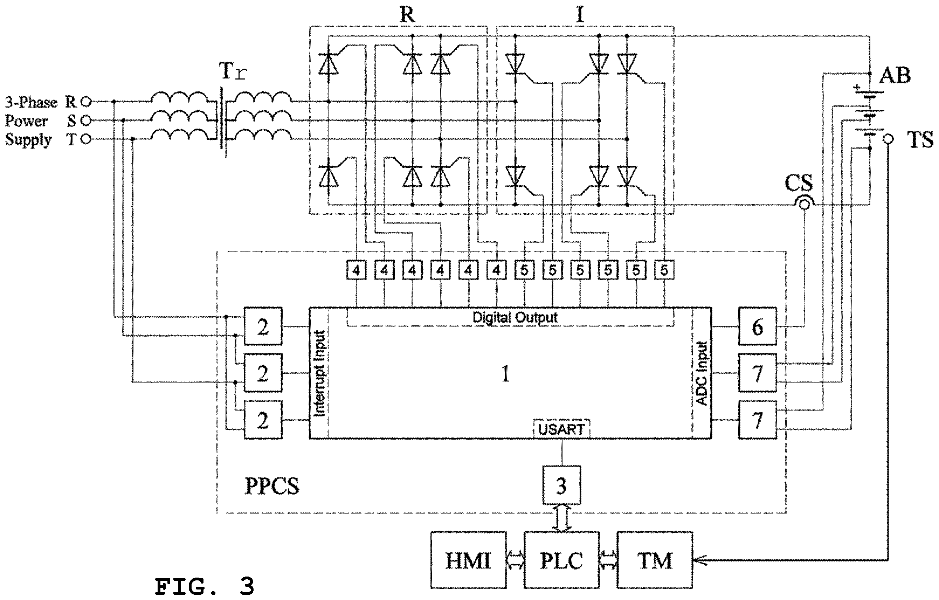

Figure 3 shows a more detailed diagram than that of Figure 1. Namely, Figure 3 shows the following elements: TS - Thermal Sensor (or "temperature sensor"); 1 - system on a chip (SoC); 2 - synchronization pulse generators; 3 - network driver (e.g., RS-485); 4 - thyristor control pulse generator for rectifier; 5 - thyristor control pulse generator for inverter; 6 - input amplifier; 7 - differential input voltage amplifiers.

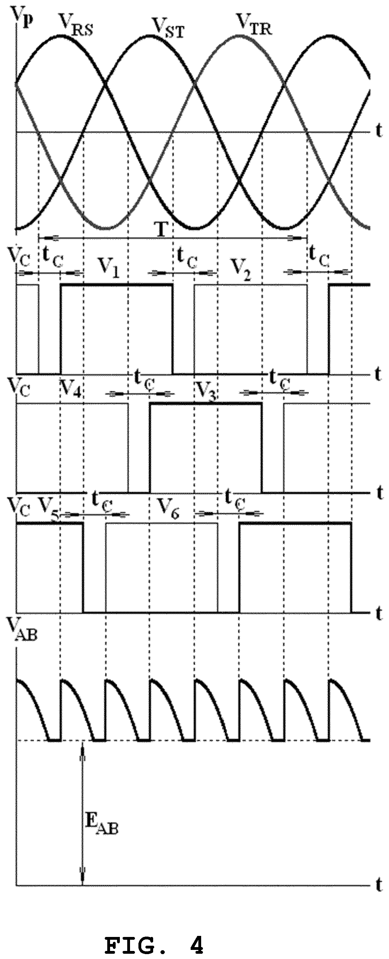

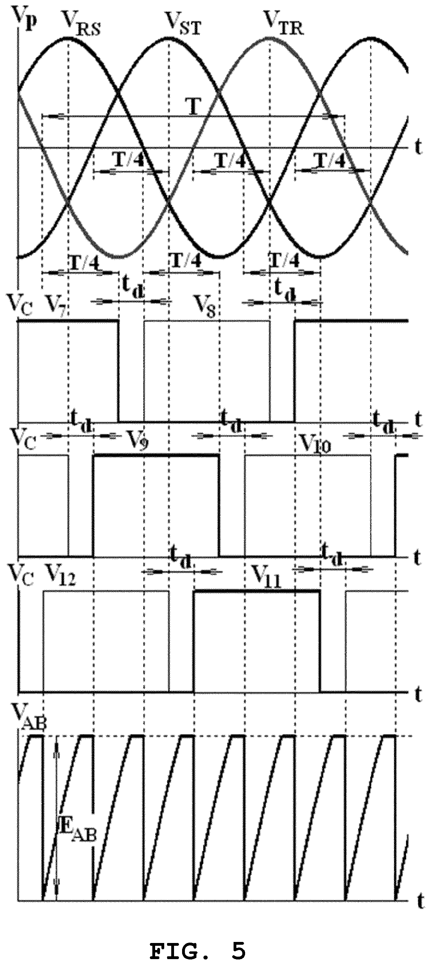

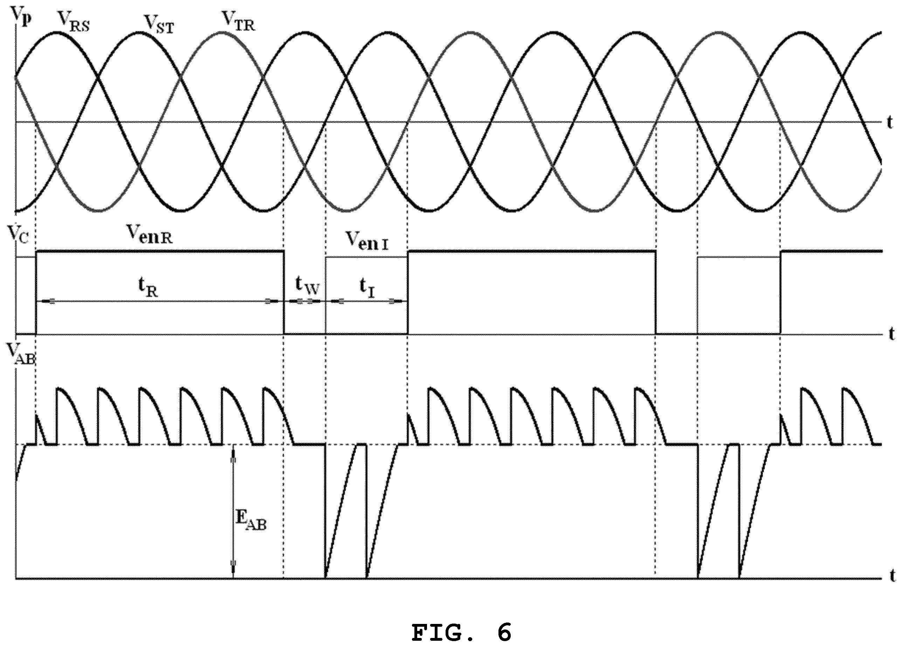

Regarding Figs. 4-6, a rectifier and inverter thyristor control algorithm is implemented in PPCS, allowing to form pulses of a constant charge current (Figure 4) or discharge current (Figure 5), as well as their cyclic combinations - i.e., forward-reverse charge current, with a pause (Figure 6).

In general, Fig. 4 explains the formation of the output pulses of voltage of the rectifier thyristors. Figure 4 has the following designations: V_{P} - supply voltage; V_{RS}, V_{ST}, V_{TR} - interphase voltages of the three-phase power supply; V_{C} - control voltage; V₁ to V₆ - control voltages related to rectifier thyristors (Figure 1); V_{AB}, E_{AB} - voltage and efficiency of the battery; t - time; T - period of the supply voltage; t_{c} - delay of the control pulses for rectifier thyristors.

In general, Fig. 5 explains the formation of the output voltage pulse from the inverter thyristors. Figure has the following designations: V_{P} - supply voltage; V_{RS}, V_{ST}, V_{TR} - interphase voltage of the three-phase power supply; V_{C} - control voltage; V₇-V₁₂ - control voltage of the corresponding inverter thyristors (Figure 3); V_{AB}, E_{AB} - voltage and efficiency of the battery; t - time; T - period of the supply voltage; t_{d} - delay of the control pulses for the inverter thyristor.

In general, Fig. 6 explains the formation of the output voltage of reverse current pulses. Figure 4 has the following designations: V_{P} - supply voltage; V_{RS}, V_{ST}, V_{TR} - interphase voltage of the three-phase power supply; V_{C} - control voltage; V_{en R} - priority of the pulses formation by the rectifier (Figure 2). V_{en I} - priority of the pulses formation by the inverter (see Figure 5). V_{AB}, E_{AB} - voltage and efficiency of the battery; t - time; t_{R} - interval for the pulse formation by the rectifier; t_{I} - interval for the pulse formation by the inverter.

To control the rectifier thyristor(s) in the SoC, three timer-counters are used, the synchronization (i.e., reset) of which is performed using a transition from negative to positive values (front transitions) of sinusoidal inter-phase (linear) voltages of the supply (top of Fig. 4). The timer-counter that controls V₁ and V₂ thyristors is synchronized by V_{TR} voltage; the timer-counter that controls V₃ and V₄ thyristors is synchronized by V_{RS}; and the timer-counter that controls V₅ and V₆ thyristors is synchronized by V_{ST}. Such is shown via the dashed lines corresponding to each labeled thyristor signal (Fig. 4).

One of the timer counters described herein also serves for measuring, T, the voltage period in the power supply network. Taking this measurement several times and over time, this particular timer stores value accumulated, and averaging said values based on a larger number of samples. The resulting average value is the voltage period, T, in the power supply network. For a desired value of the phase shift of the thyristor control signal on the SoC, the delay on the tC thyristors turning-on may be calculated, as well as the time moments, in order to enable or disable the thyristors based on the timer-counters. When these calculated values coincide with the values accumulated in the timer-counters, the desired level of the thyristor control signal V_{C} is achieved (Fig. 4), and the sequence of voltage pulses V_{AB} outputs from the device and is sent to the battery.

The remaining three timer-counters are used to control the inverter thyristors. They are synchronized at moments of inter-phase voltage peaks in the supply network. The moments of maxima (Fig. 5) of inter-phase voltage are detained by the interval, T/4, relative to the moments of frontal transitions of the inter-phase voltage. For example, a timer-counter may be programmed to measure a period of T/4 after a frontal transition of an interphase voltage coupled to that timer-counter; therefore, at the end of the period of T/4, which is initiated by the frontal transition, the timer-counter may cause the thyristor to switch (i.e., the switch occurs at the moment of maxima of that particular interphase voltage, via the algorithm). The timer-counter that controls thyristors V₇ and V₈ is synchronized with the voltage V_{TR}, the timer-counter that controls thyristors V₉ and V₁₀ is synchronized with the voltage V_{RS}, and the timer-counter that controls thyristors V₁₁ and V₁₂ is synchronized with the voltage V_{ST}. The control of the inverter thyristors is similar to the control of rectifier thyristors.

The formation of pulses of forward-reverse currents as the combined output of the device (Fig. 6) is carried out by sequential operation of the thyristors of the rectifier and the inverter. Pulses that control the rectifier thyristors are formed only at a high level of the V_{enR} signal, and pulses that control the inverter thyristors are formed only at a high level of the V_{enI} signal. The rectifier operation starts when one of the inter-phase voltages crosses zero. The duration of this interval, t_{R}, is always a multiple of the period of the voltage in the supply network. After ending of the interval, t_{R}, the inverter operation interval, t_{I}, starts after the next transition through zero of one of the inter-phase voltages. This solution allows for creating a minimally adequate t_{W} pause to close all the thyristors of the rectifier. The t_{I} interval ends only after the next zero crossing of the inter-phase voltage. Then, the rectifier operation interval begins and thus the formation of the cycle of the forward-reverse current pulses are repeated.

Thus, the present invention allows for creating forward-reverse current pulses with a repetition period starting from one and a half periods of voltage in the supply network.

A 4-stage battery charging mode, in contrast to existing charging modes, allows for a second stage wherein an alignment of battery characteristics occurs (cf. averaging stage). The characteristics of the battery are aligned by using an alternating current with a charge equal to the average pulse forward and reverse currents. It should be noted that the proposed alignment procedure is carried out without additional charge devices and does not require monitoring of the state of the battery or batteries.

In order to form a reverse charge current and discharge current pulses, the invention uses a thyristor inverter driven network that allows to recover the electrical energy delivered by the battery in the power supply network. Due to this, the device does not contain elements which may scatter this energy, such as, e.g., power resistors.

Combining the functions of thyristor rectifier and inverter control, digitizing the instantaneous values of current through the battery, and calculating instantaneous values and/or the mean values of the forward and reverse charge and discharge currents, regulation and stabilization of the current in a single system on a single SoC chip is achieved. It is possible to increase the speed of the thyristor control system and its reliability, and improve the parameters of the current regulation. A narrow pulse after a failure is the result of a side effect of an arrival of the front of the rectification signal of the rectifier V_{enR} (Figure 4). This occurs at the moment of fulfilling the conditions for unlocking the rectifier thyristors, V₄ and V₅ (Figure 2). The presently disclosed systems and devices allows, through the operation of the algorithm, for the generation of reverse pulses with a period of 25ms - 30 ms after a forward pulse.

The method for battery maintenance further implementing voltage control of the battery by checking a voltage across the battery and a control group of battery cells and determining if a threshold value is being exceeded then terminating battery maintenance.

The method for battery maintenance further implementing voltage control of the battery by checking a voltage across the battery and a control group of battery cells and determining if a threshold value is being exceeded then reducing charge current by 20 % - 50 % and lengthening stage phase duration accordingly.

The method of battery maintenance, wherein a reverse current period is between 30 ms and 1000 ms in duration. The method of battery maintenance, wherein during stage 2 the average values of reverse current and forward current are equal. The method of battery maintenance, wherein during stage 2 wherein a reverse current period is between 30 ms and 1000 ms in duration. The method for battery maintenance, wherein during stage 3 a duration of the powerful pulses of reverse current is between 180 ms and 1000 ms, and a duration of the dead time is between 1000 ms and 5000 ms. The method for battery maintenance, wherein during stage 3 a ratio between reverse current and either forward current or dead time is between 10:1 and 20:1. The method for battery maintenance, further implementing a temperature control of an electrolyte in the battery, comprising: (1) monitoring the battery and determining if a battery temperature exceeds values of 35°C - 50 °C during maintenance then reducing charge current by 30 % - 50 % and extending a charging stage for the battery accordingly; and (2) monitoring the battery and determining if a battery temperature exceeds values of 45 °C - 50 °C during maintenance then interrupting maintenance until the battery has cooled to a temperature of 25 °C - 35 °C.

The description of a preferred embodiment of the invention has been presented for purposes of illustration and description. It is not intended to be exhaustive or to limit the invention to the precise forms disclosed. Obviously, many modifications and variations will be apparent to practitioners skilled in this art. It is intended that the scope of the invention be defined by the following claims.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singularform.

## Claims

1. A device for battery charging and maintenance, comprising:
a terminal for an accumulator battery (AB);
the terminal having a positive side connected to a current sensor (CS);
the terminal having a negative side connected to ground;
the current sensor being electronically connected to a rectifier (R), said rectifier comprising at least three rectifier thyristors, and being connected to an inverter (I),
said inverter comprising at least three inverter thyristors;
the rectifier (R) and the inverter (I) are being connected to a transformer (Tr);
the transformer (Tr) being adapted for connection to a power supply; and
the terminal, the accumulator battery (AB), the inverter (I), the rectifier (R), and the current sensor (CS) are together electronically connected to a phase-pulse control system (PPCS), thus forming a power supply network, said phase-pulse control system (PPCS) being configured to cause the power supply network to perform at least one stage, said stage selectively comprising at least one of:
• forming a first pulse,
• causing a pause, and
• forming a second pulse,
in case of forming a first pulse, said first pulse being formed by the rectifier (R), said first pulse being synchronized via a front transition of a sinusoidal inter-phase voltage signal (V_{RS}, V_{ST}, V_{TR}),
• wherein a first timer-counter configured to control a first set of thyristors in the rectifier (R) is synchronized by a first inter-phase voltage (V_{RS}),
• wherein a second timer-counter configured to control a second set of thyristors in the rectifier (R) is synchronized by a second inter-phase voltage (V_{ST}),
• wherein a third timer-counter configured to control a third set of thyristors in the rectifier (R) is synchronized by a third inter-phase voltage (V_{TR}),
in case of causing a pause, said pause being caused by an end of an interval prior to a consecutive front transition, said pause further causing a closure of the thyristors of the rectifier (R),
in case of forming a second pulse, said second pulse being formed by the inverter (I), said second pulse being synchronized at moments of inter-phase voltage peaks in the power supply network, said inter-phase voltage peaks being determined by adding an interval of a total period (T) of the voltage in the power supply network divided by 4 to a given moment of the front transition of the interphase voltage signals,
• wherein a fourth timer-counter configured to control a first set of inverter thyristors is synchronized by the first inter-phase voltage,
• wherein a fifth timer-counter configured to control a second set of inverter thyristors is synchronized by the second inter-phase voltage,
• wherein a sixth timer-counter configured to control a third set of inverter thyristors is synchronized by the third inter-phase voltage; and
repeating said first pulse, said pause, and said second pulse;
wherein the total period (T) of the voltage in the power supply network is measured by one of the timer-counters to obtain a value for the total period, and wherein zero-crossings are detected to obtain synchronization, wherein wherein the total period (T) is measured multiple times and obtained as an average over multiple measurements.

2. The device of claim 1, wherein the pause has a duration between 3 and 5 milli seconds, or wherein the pause has a duration between 30 and 70 milli seconds.

3. The device of claim 1, wherein the phase-pulse control system (PPCS) is in further electronic communication with a programmable logic controller (PLC).

4. The device of claim 3, wherein the programmable logic controller is electronically further connected to a human machine interface (HMI) and to a thermal monitor.

5. The device of claim 4, wherein the thermal monitor is further connected to a temperature sensor (TS), said temperature sensor (TS) being in contact with the accumulator battery (AB).

6. A method for battery maintenance, comprising:
connecting a battery (AB) to a power supply network,
performing at least one stage of current application to the battery, comprising:
forming a first pulse, said first pulse being formed by a rectifier (R), said rectifier comprising at least three thyristors, said first pulse being synchronized via a front transition of a sinusoidal inter-phase voltage signal,
• wherein a first timer-counter controlling a first set of thyristors in the rectifier (R) is synchronized by a first inter-phase voltage (V_{RS}),
• wherein a second timer-counter controlling a second set of thyristors in the rectifier (R) is synchronized by a second inter-phase voltage (V_{ST}),
• wherein a third timer-counter controlling a third set of thyristors in the rectifier (R) is synchronized by a third inter-phase voltage (V_{TR}),
forming a second pulse, said second pulse being formed by an inverter (I), said inverter comprising at least three thyristors, said second pulse being synchronized at moments of inter-phase voltage peaks in the power supply network, said inter-phase voltage peaks being determined by adding an interval of a total period (T) of the voltage in the power supply network divided by 4 to a given moment of the front transition of the inter-phase voltage signal,
• wherein a fourth timer-counter controlling a first set of inverter thyristors is synchronized by the first inter-phase voltage,
• wherein a fifth timer-counter controlling a second set of inverter thyristors is synchronized by the second inter-phase voltage,
• wherein a sixth timer-counter controlling a third set of inverter thyristors is synchronized by the third inter-phase voltage;
wherein a pause occurs between said first pulse and said second pulse, said pause being caused by an end of an interval prior to a consecutive front transition, said pause further causing a closure of all rectifier thyristors,
thus forming a first pulse-pause-second pulse signal for one or more stages of battery maintenance, and
repeating said first pulse, said pause, and said second pulse;
wherein the total period (T) of the voltage in the power supply network is measured by one of the timer-counters to obtain a value for the total period, and wherein zero-crossings are detected to obtain synchronization, wherein wherein the total period (T) is measured multiple times and obtained as an average over multiple measurements.

7. The method of claim 6, comprising
• a first stage, in that the stage of current application is a maintenance stage, for preliminary charging using forward current and reverse current, and
• a second stage, in that the stage of current application is a maintenance stage, said second stage employing a current pattern with substantially equal magnitudes of forward and reverse currents.

8. The method of claim 7, further comprising
• a third stage, being a maintenance stage, said third stage employing pulses of forward and reverse current, and said third state employing interruptions after the pulses with reverse current, and
• a fourth stage, being a maintenance stage, said fourth stage charging the battery using forward and reverse current.

9. The method of claim 8, wherein the third stage and the fourth stage are being repeated.

10. The method of claim 8, wherein the third stage and the fourth stage are repeated at least once, and wherein the second stage is performed during an interval having a duration between 0.5 hours and 1 hour, and wherein a reverse current period has a duration between 30 milli seconds and 1000 milli seconds.

11. The method of claim 7, wherein during the second stage the average values of reverse current and forward current are equal, and wherein a reverse current period is between 30 and 1000 ms in duration.

12. The method of claim 8, wherein during the third stage, a duration of the pulses of reverse current is between 180 ms and 1000 ms and a duration of the pause is between 1000 and 5000 ms, and wherein during said third stage a ratio between forward current and reverse current is between 10:1 and 20:1.

13. The method for battery maintenance of claim 6, further implementing a temperature control of an electrolyte in the battery, comprising:
(a) monitoring the battery and determining if a battery temperature exceeds a first threshold, having a value between 35 °C and 50 °C during maintenance, then reducing the charge current by a factor having a value between 30 % and 50 % and extending a charging stage for the battery accordingly; and
(b) monitoring the battery and determining if a battery temperature exceeds a second threshold, having a value between 45 °C and 50 °C during maintenance then interrupting maintenance until the battery has cooled to a temperature of a values between 25 °C and 35 °C.

## Patentansprüche

1. Vorrichtung zum Laden und zur Wartung von Batterien, Folgendes umfassend:
einen Anschluss für eine Akkumulatorenbatterie (*accumulator battery-* AB);
wobei der Anschluss eine positive Seite aufweist, die mit einem Stromsensor (*current sensor* - CS) verbunden ist;
wobei der Anschluss eine negative Seite aufweist, die mit Masse verbunden ist;
wobei der Stromsensor elektronisch mit einem Gleichrichter (*rectifier-* R) verbunden ist,
wobei der Gleichrichter mindestens drei Gleichrichter-Thyristoren umfasst, und mit einem Wechselrichter (*inverter* - I) verbunden ist, wobei der Wechselrichter mindestens drei Wechselrichter-Thyristoren umfasst;
wobei der Gleichrichter (R) und der Wechselrichter (I) mit einem Transformator (*transformer* - Tr) verbunden sind;
wobei der Transformator (Tr) angepasst ist, um mit einer Stromversorgung verbunden zu werden; und
wobei der Anschluss, die Akkumulatorenbatterie (AB), der Wechselrichter (I), der Gleichrichter (R) und der Stromsensor (CS) zusammen elektronisch mit einem Phasen-Impuls-Steuersystem (*phase-pulse control system* - PPCS) verbunden sind, wodurch ein Stromversorgungsnetz gebildet wird, wobei das Phasen-Impuls-Steuersystem (PPCS) zum Bewirken, dass das Stromversorgungsnetz mindestens eine Stufe durchführt, konfiguriert ist,
wobei die Stufe selektiv Folgendes umfasst:
• Bilden eines ersten Impulses,
• Bewirken einer Pause, und/oder
• Bilden eines zweiten Impulses,
wobei im Falle des Bildens eines ersten Impulses der erste Impuls durch den Gleichrichter (R) gebildet wird, wobei der erste Impuls über einen Frontübergang eines sinusförmigen Zwischenphasenspannungssignals (V_{RS}, V_{ST}, V_{TR}) synchronisiert wird,
• wobei ein erster Zeitgeber-Zähler, der zur Steuerung eines ersten Satzes von Thyristoren in dem Gleichrichter (R) konfiguriert ist, durch eine erste Zwischenphasenspannung (V_{RS}) synchronisiert wird,
• wobei ein zweiter Zeitgeber-Zähler, der zur Steuerung eines zweiten Satzes von Thyristoren in dem Gleichrichter (R) konfiguriert ist, durch eine zweite Zwischenphasenspannung (V_{ST}) synchronisiert wird,
• wobei ein dritter Zeitgeber-Zähler, der zur Steuerung eines dritten Satzes von Thyristoren in dem Gleichrichter (R) konfiguriert ist, durch eine dritte Zwischenphasenspannung (V_{TR}) synchronisiert wird,
wobei im Falle des Bewirkens einer Pause die Pause durch ein Ende eines Intervalls vor einem aufeinanderfolgenden Frontübergang bewirkt wird, wobei die Pause ferner ein Schließen der Thyristoren des Gleichrichters (R) bewirkt,
wobei im Falle des Bildens eines zweiten Impulses der zweite Impuls durch den Wechselrichter (I) gebildet wird, wobei der zweite Impuls zu Zeitpunkten von Zwischenphasen-Spannungsspitzen in dem Stromversorgungsnetz synchronisiert wird,
wobei die Zwischenphasen-Spannungsspitzen durch Addieren eines Intervalls einer Gesamtperiode (*total period* - T) der Spannung in dem Stromversorgungsnetz geteilt durch 4 zu einem gegebenen Zeitpunkt des Frontübergangs der Zwischenphasen-Spannungssignale bestimmt werden,
• wobei ein vierter Zeitgeber-Zähler, der zur Steuerung eines ersten Satzes von Wechselrichter-Thyristoren konfiguriert ist, durch die erste Zwischenphasenspannung synchronisiert wird,
• wobei ein fünfter Zeitgeber-Zähler, der zur Steuerung eines zweiten Satzes von Wechselrichter-Thyristoren konfiguriert ist, durch die zweite Zwischenphasenspannung synchronisiert wird,
• wobei ein sechster Zeitgeber-Zähler, der zur Steuerung eines dritten Satzes von Wechselrichter-Thyristoren konfiguriert ist, durch die dritte Zwischenphasenspannung synchronisiert wird; und
Wiederholen des ersten Impulses, der Pause und des zweiten Impulses;
wobei die Gesamtperiode (T) der Spannung in dem Stromversorgungsnetz durch einen der Zeitgeber-Zähler gemessen wird, um einen Wert für die Gesamtperiode zu erhalten, und wobei Nulldurchgänge detektiert werden, um eine Synchronisation zu erhalten, wobei die Gesamtperiode (T) mehrfach gemessen und als ein Mittelwert über mehrere Messungen erhalten wird.

2. Vorrichtung nach Anspruch 1, wobei die Pause eine Dauer zwischen 3 und 5 Millisekunden aufweist, oder wobei die Pause eine Dauer zwischen 30 und 70 Millisekunden aufweist.

3. Vorrichtung nach Anspruch 1, wobei das Phasen-Impuls-Steuersystem (PPCS) ferner in elektronischer Kommunikation mit einer speicherprogrammierbaren Steuerung (*programmable logic controller* - PLC) steht.

4. Vorrichtung nach Anspruch 3, wobei die speicherprogrammierbare Steuerung elektronisch ferner mit einer Mensch-Maschine-Schnittstelle (*human machine interface* - HMI) und mit einem thermischen Monitor verbunden ist.

5. Vorrichtung nach Anspruch 4, wobei der thermische Monitor ferner mit einem Temperatursensor (*temperature sensor-* TS) verbunden ist, wobei der Temperatursensor (TS) in Kontakt mit der Akkumulatorenbatterie (AB) steht.

6. Verfahren zum Warten von Batterien, Folgendes umfassend:
Verbinden einer Batterie (AB) mit einem Stromversorgungsnetz,
wobei mindestens eine Stufe einer Stromanwendung an die Batterie durchgeführt wird, Folgendes umfassend:
Bilden eines ersten Impulses, wobei der erste Impuls durch einen Gleichrichter (R) gebildet wird, wobei der Gleichrichter mindestens drei Thyristoren umfasst, wobei der erste Impuls über einen Frontübergang eines sinusförmigen Zwischenphasenspannungssignals synchronisiert wird,
• wobei ein erster Zeitgeber-Zähler, der einen ersten Satz von Thyristoren in dem Gleichrichter (R) steuert, durch eine erste Zwischenphasenspannung (V_{RS}) synchronisiert wird,
• wobei ein zweiter Zeitgeber-Zähler, der einen zweiten Satz von Thyristoren in dem Gleichrichter (R) steuert, durch eine zweite Zwischenphasenspannung (V_{ST}) synchronisiert wird,
• wobei ein dritter Zeitgeber-Zähler, der einen dritten Satz von Thyristoren in dem Gleichrichter (R) steuert, durch eine dritte Zwischenphasenspannung (V_{TR}) synchronisiert wird,
Bilden eines zweiten Impulses, wobei der zweite Impuls durch einen Wechselrichter (I) gebildet wird, wobei der Wechselrichter mindestens drei Thyristoren umfasst, wobei der zweite Impuls zu Zeitpunkten von Zwischenphasen-Spannungsspitzen in dem Stromversorgungsnetz synchronisiert wird, wobei die Zwischenphasen-Spannungsspitzen durch Addieren eines Intervalls einer Gesamtperiode (T) der Spannung in dem Stromversorgungsnetz geteilt durch 4 zu einem gegebenen Zeitpunkt des Frontübergangs des Zwischenphasen-Spannungssignals bestimmt werden,
• wobei ein vierter Zeitgeber-Zähler, der einen ersten Satz von Wechselrichter-Thyristoren steuert, durch die erste Zwischenphasenspannung synchronisiert wird,
• wobei ein fünfter Zeitgeber-Zähler, der einen zweiten Satz von Wechselrichter-Thyristoren steuert, durch die zweite Zwischenphasenspannung synchronisiert wird,
• wobei ein sechster Zeitgeber-Zähler, der einen dritten Satz von Wechselrichter-Thyristoren steuert, durch die dritte Zwischenphasenspannung synchronisiert wird;
wobei eine Pause zwischen dem ersten Impuls und dem zweiten Impuls auftritt, wobei die Pause durch ein Ende eines Intervalls vor einem aufeinanderfolgenden Frontübergang bewirkt wird,
wobei die Pause ferner ein Schließen aller Gleichrichter-Thyristoren bewirkt, wodurch ein Erstimpuls-Pause-Zweitimpuls-Signal für eine oder mehrere Stufen der Batteriewartung gebildet wird, und
Wiederholen des ersten Impulses, der Pause und des zweiten Impulses;
wobei die Gesamtperiode (T) der Spannung in dem Stromversorgungsnetz durch einen der Zeitgeber-Zähler gemessen wird, um einen Wert für die Gesamtperiode zu erhalten, und wobei Nulldurchgänge detektiert werden, um eine Synchronisation zu erhalten, wobei die Gesamtperiode (T) mehrfach gemessen und als ein Mittelwert über mehrere Messungen erhalten wird.

7. Verfahren nach Anspruch 6, Folgendes umfassend:
• eine erste Stufe, insofern als die Stufe der Stromanwendung eine Wartungsstufe ist, zum vorläufigen Laden unter Verwendung von Vorwärts- und Rückwärtsstrom, und
• eine zweite Stufe, insofern als die Stufe der Stromanwendung eine Wartungsstufe ist, wobei die zweite Stufe ein Strommuster mit im Wesentlichen gleichen Größen von Vorwärts- und Rückwärtsströmen nutzt.

8. Verfahren nach Anspruch 7, ferner Folgendes umfassend:
• eine dritte Stufe, die eine Wartungsstufe ist, wobei die dritte Stufe Vorwärts- und Rückwärtsstromimpulse nutzt und der dritte Zustand Unterbrechungen nach den Impulsen mit Rückwärtsstrom nutzt, und
• eine vierte Stufe, die eine Wartungsstufe ist, wobei die vierte Stufe die Batterie unter Verwendung von Vorwärts- und Rückwärtsstrom lädt.

9. Verfahren nach Anspruch 8, wobei die dritte Stufe und die vierte Stufe wiederholt werden.

10. Verfahren nach Anspruch 8, wobei die dritte Stufe und die vierte Stufe mindestens einmal wiederholt werden, und wobei die zweite Stufe während eines Intervalls, das eine Dauer zwischen 0,5 Stunden und 1 Stunde aufweist, durchgeführt wird, und wobei eine Rückwärtsstromperiode eine Dauer zwischen 30 Millisekunden und 1000 Millisekunden aufweist.

11. Verfahren nach Anspruch 7, wobei während der zweiten Stufe die Mittelwerte von Rückwärtsstrom und Vorwärtsstrom gleich sind und wobei eine Rückwärtsstromperiode eine Dauer zwischen 30 und 1000 ms aufweist.

12. Verfahren nach Anspruch 8, wobei während der dritten Stufe eine Dauer der Rückwärtsstromimpulse zwischen 180 ms und 1000 ms und eine Dauer der Pause zwischen 1000 und 5000 ms liegt, und wobei während der dritten Stufe ein Verhältnis zwischen Vorwärtsstrom und Rückwärtsstrom zwischen 10 : 1 und 20 : 1 liegt.

13. Verfahren zum Warten von Batterien nach Anspruch 6, wobei ferner eine Temperatursteuerung eines Elektrolyten in der Batterie implementiert wird, Folgendes umfassend:
(a) Überwachen der Batterie und Bestimmen, ob eine Batterietemperatur einen ersten Schwellenwert überschreitet, der während der Wartung einen Wert zwischen 35 °C und 50 °C aufweist, dann Reduzieren des Ladestroms um einen Faktor, der einen Wert zwischen 30 % und 50 % aufweist, und entsprechendes Verlängern einer Ladestufe für die Batterie; und
(b) Überwachen der Batterie und Bestimmen, ob eine Batterietemperatur einen zweiten Schwellenwert überschreitet, der während der Wartung einen Wert zwischen 45 °C und 50 °C aufweist, dann Unterbrechen der Wartung, bis die Batterie auf eine Temperatur von Werten zwischen 25 °C und 35 °C abgekühlt ist.

## Revendications

1. Dispositif de charge et d'entretien de batterie, comprenant :
une borne pour une batterie d'accumulateurs (AB) ;
la borne ayant un côté positif connecté à un capteur de courant (CS) ;
la borne ayant un côté négatif connecté à la masse ;
le capteur de courant étant connecté électroniquement à un redresseur (R), ledit redresseur comprenant au moins trois redresseurs à thyristors, et étant connecté à un onduleur (I), ledit onduleur comprenant au moins trois onduleurs à thyristors ;
le redresseur (R) et l'onduleur (I) étant connectés à un transformateur (Tr) ;
le transformateur (Tr) étant adapté pour être connecté à une alimentation en énergie ; et
la borne, la batterie d'accumulateurs (AB), l'onduleur (I), le redresseur (R) et le capteur de courant (CS) étant connectés ensemble électroniquement à un système de commande par impulsion de phase (PPCS), formant ainsi un réseau d'alimentation en énergie, ledit système de commande par impulsion de phase (PPCS) étant configuré pour entraîner le réseau d'alimentation en énergie à réaliser au moins une étape, ladite étape comprenant sélectivement :
• la formation d'une première impulsion,
• et/ou l'entraînement d'une pause, et/ou
• la formation d'une seconde impulsion,
en cas de formation d'une première impulsion, ladite première impulsion étant formée par le redresseur (R), ladite première impulsion étant synchronisée par l'intermédiaire d'une transition avant d'un signal de tension interphase sinusoïdale(V_{RS}, V_{ST}, V_{TR}),
• dans lequel un premier compteur-temporisateur configuré pour commander un premier ensemble de thyristors dans le redresseur (R) est synchronisé par une première tension interphase (V_{RS}),
• dans lequel un deuxième compteur-temporisateur configuré pour commander un deuxième ensemble de thyristors dans le redresseur (R) est synchronisé par une deuxième tension interphase (V_{ST}),
• dans lequel un troisième compteur-temporisateur configuré pour commander un troisième ensemble de thyristors dans le redresseur (R) est synchronisé par une troisième tension interphase (V_{TR}),
en cas d'entraînement d'une pause, ladite pause étant entraînée par une fin d'intervalle antérieure à une transition avant consécutive, ladite pause entraînant en outre une fermeture des thyristors du redresseur (R),
en cas de formation d'une seconde impulsion, ladite seconde l'impulsion étant formée par l'onduleur (I), ladite seconde impulsion étant synchronisée à des moments de crêtes de tension interphase dans le réseau d'alimentation en énergie, lesdites crêtes de tension interphase étant déterminées par l'ajout d'un intervalle d'une période totale (T) de la tension dans le réseau d'alimentation en énergie divisée par 4 à un moment donné de la transition avant des signaux de tension interphase,
• dans lequel un quatrième compteur-temporisateur configuré pour commander un premier ensemble d'onduleurs à thyristors est synchronisé par la première tension interphase,
• dans lequel un cinquième compteur-temporisateur configuré pour commander un deuxième ensemble d'onduleurs à thyristors est synchronisé par la deuxième tension interphase,
• dans lequel un sixième compteur-temporisateur configuré pour commander un troisième ensemble d'onduleurs à thyristors est synchronisé par la troisième tension interphase ; et
la répétition de ladite première impulsion, de ladite pause et de ladite seconde impulsion ;
dans lequel la période totale (T) de la tension dans le réseau d'alimentation en énergie est mesurée par l'un des compteurs-temporisateurs pour obtenir une valeur pour la période totale, et dans lequel les passages par zéro sont détectés pour obtenir la synchronisation,
dans lequel la période totale (T) est mesurée plusieurs fois et obtenue sous forme de moyenne sur plusieurs mesures.

2. Dispositif selon la revendication 1, dans lequel la pause a une durée comprise entre 3 et 5 millisecondes, ou dans lequel la pause a une durée comprise entre 30 et 70 millisecondes.

3. Dispositif selon la revendication 1, dans lequel le système de commande par impulsion de phase (PPCS) est en communication électronique supplémentaire avec un automate programmable industriel (API).

4. Dispositif selon la revendication 3, dans lequel l'automate programmable industriel est en outre connecté électroniquement à une interface homme-machine (IHM) et à un moniteur thermique.

5. Dispositif selon la revendication 4, dans lequel le moniteur thermique est en outre connecté à un capteur de température (TS), ledit capteur de température (TS) étant en contact avec la batterie d'accumulateurs (AB).

6. Procédé d'entretien de batterie, comprenant :
la connexion d'une batterie (AB) à un réseau d'alimentation en énergie,
la réalisation d'au moins une étape d'application du courant sur la batterie, comprenant :
la formation d'une première impulsion, ladite première impulsion étant formée par un redresseur (R), ledit redresseur comprenant au moins trois thyristors, ladite première impulsion étant synchronisée par l'intermédiaire d'une transition avant d'un signal de tension interphase sinusoïdale,
• dans lequel un premier compteur-temporisateur commandant un premier ensemble de thyristors dans le redresseur (R) est synchronisé par une première tension interphase (V_{RS}),
• dans lequel un deuxième compteur-temporisateur commandant un deuxième ensemble de thyristors dans le redresseur (R) est synchronisé par une deuxième tension interphase (V_{ST}),
• dans lequel un troisième compteur-temporisateur commandant un troisième ensemble de thyristors dans le redresseur (R) est synchronisé par une troisième tension interphase (V_{TR}),
la formation d'une seconde impulsion, ladite seconde impulsion étant formée par un onduleur (I), ledit onduleur comprenant au moins trois thyristors, ladite seconde impulsion étant synchronisée à des moments de crêtes de tension interphase dans le réseau d'alimentation en énergie, lesdites crêtes de tension interphase étant déterminées par l'ajout d'un intervalle d'une période totale (T) de la tension dans le réseau d'alimentation en énergie divisée par 4 à un moment donné de la transition avant du signal de tension interphase,
• dans lequel un quatrième compteur-temporisateur commandant un premier ensemble d'onduleurs à thyristors est synchronisé par la première tension interphase,
• dans lequel un cinquième compteur-temporisateur commandant un deuxième ensemble d'onduleurs à thyristors est synchronisé par la deuxième tension interphase,
• dans lequel un sixième compteur-temporisateur commandant un troisième ensemble d'onduleurs à thyristors est synchronisé par la troisième tension interphase ;
dans lequel une pause se produit entre ladite première impulsion et ladite seconde impulsion, ladite pause étant entraînée par une fin d'intervalle antérieure à une transition avant consécutive, ladite pause entraînant en outre une fermeture de tous les redresseurs à thyristors,
formant ainsi un premier signal à impulsions impulsion-pause-seconde pour une ou plusieurs étapes d'entretien de la batterie, et
la répétition de ladite première impulsion, de ladite pause et de ladite seconde impulsion ; dans lequel la période totale (T) de la tension dans le réseau d'alimentation en énergie est mesurée par l'un des compteurs-temporisateurs pour obtenir une valeur pour la période totale, et dans lequel les passages par zéro sont détectés pour obtenir la synchronisation,
dans lequel la période totale (T) est mesurée plusieurs fois et obtenue sous forme de moyenne sur plusieurs mesures.

7. Procédé selon la revendication 6, comprenant
• une première étape, en ce que l'étape d'application de courant est une étape d'entretien, pour une charge préliminaire à l'aide d'un courant direct et d'un courant inverse, et
• une deuxième étape, en ce que l'étape d'application de courant est une étape d'entretien, ladite deuxième étape employant un modèle de courant avec des amplitudes sensiblement égales de courants direct et inverse.

8. Procédé selon la revendication 7, comprenant en outre
• une troisième étape, étant une étape d'entretien, ladite troisième étape employant des impulsions de courant direct et inverse, et ledit troisième état employant des interruptions après les impulsions en courant inverse, et
• une quatrième étape, étant une étape d'entretien, ladite quatrième étape chargeant la batterie à l'aide de courant direct et inverse.

9. Procédé selon la revendication 8, dans lequel la troisième étape et la quatrième étape sont répétées.

10. Procédé selon la revendication 8, dans lequel la troisième étape et la quatrième étape sont répétées au moins une fois, et dans lequel la deuxième étape est réalisée pendant un intervalle ayant une durée comprise entre 0,5 heure et 1 heure, et dans lequel une période de courant inverse a un durée comprise entre 30 millisecondes et 1 000 millisecondes.

11. Procédé selon la revendication 7, dans lequel pendant la deuxième étape les valeurs moyennes du courant inverse et du courant direct sont égales, et dans lequel une période de courant inverse a une durée comprise entre 30 et 1 000 ms.

12. Procédé selon la revendication 8, dans lequel pendant la troisième étape, une durée des impulsions de courant inverse est comprise entre 180 ms et 1 000 ms et une durée de la pause est comprise entre 1 000 et 5 000 ms, et dans lequel pendant ladite troisième étape un rapport entre le courant direct et le courant inverse est compris entre 10:1 et 20:1.

13. Procédé d'entretien de batterie selon la revendication 6, mettant en œuvre en outre une régulation de température d'un électrolyte dans la batterie, comprenant :
(a) la surveillance de la batterie et la détermination de savoir si une température de batterie dépasse un premier seuil, ayant une valeur comprise entre 35 °C et 50 °C pendant l'entretien, puis la réduction du courant de charge par un facteur ayant une valeur comprise entre 30 % et 50 % et la prolongation d'une étape de charge pour la batterie en conséquence ; et
(b) la surveillance de la batterie et la détermination de savoir si une température de batterie dépasse un second seuil, ayant une valeur comprise entre 45 °C et 50 °C pendant l'entretien, puis l'interruption de l'entretien jusqu'à ce que la batterie se soit refroidie à une température d'une valeur comprise entre 25 °C et 35 °C.
